# EUROPEAN PATENT SPECIFICATION

(11) **EP 0 450 894 B1**
(45) Date of publication and mention of the grant of the patent: **19.03.1997**
(21) Application number: 91302844.5
(22) Date of filing: 02.04.1991
(51) Int. Cl.: C08J 9/24, B01D 39/16

(54) **Porous PTFE structures**
Poröse PTFE-Struktur
Structure poreuse de PTFE

(30) Priority: 31.03.1990 GB 9007304
(43) Date of publication of application: 09.10.1991
(73) Proprietor: W.L. GORE & ASSOCIATES (UK) LTD, London WC2A 2JP (GB)
(72) Inventor: Allan, Andrew Miller, Perthshire PH10 6UD, Scotland (GB); Barker, Brian Andrew, Dundee, Tayside DD4 7TP (GB)
(74) Representative: Horner, Martin Grenville

(56) References cited:
- EP-A- 172 750
- EP-A- 369 466
- BE-A- 671 689
- CH-A- 405 707
- DE-A- 1 199 972
- FR-A- 1 272 579
- FR-A- 2 050 778
- CHEMICAL ABSTRACTS, vol. 92, no. 12, 24th March 1980, page 38, abstract no. 95225p, Columbus, Ohio, US; & JP-A-79 133 566

## Description

The present invention relates to a porous polytetrafluoroethylene (PTFE) structure.

A use envisaged for the structure is as a filter for industrial filtration, particularly for solid liquid, solid/gas and liquid/liquid separation. However, the structure may also find use in other applications where porous structures are required.

The traditional method of producing filter elements almost invariably relies on a two stage process, i.e. the manufacture of a member (usually of metal e.g. a wire mesh cage) which acts as a strength member and gives a shape or form onto which a filter cloth (i.e. the filter medium) or bag can be attached. The filter medium has traditionally been constructed from either specially woven metallic and non-metallic fabrics or needle punched felt and has generally been sewn together to form a construction which can then be attached to or slipped onto or over the element. The combined construction (generally with many such identical constructions) fits together inside a filter housing.

The filter operates with the filter cloth acting as the filter medium and the strength member providing a support for the filter cloth during the filtration process. Most filters have built-in cleaning systems, but after a period the filter cloth normally has to be removed and either cleaned or replaced.

PTFE is a useful material for the construction of filter media in view of its chemical inertness and ease of cleaning. Textile materials based on PTFE have been used in solid/gas and solid/liquid filtration applications. One example is removal of particulate material from furnace exhaust gases. However, the open pore structure of these PTFE textile materials does not give acceptable filtration performance in many filtration applications e.g. solid/liquid separation.

It is known to apply PTFE coatings to substrates to impart non-stick properties or chemical inertness. Patent specification GB 2051091 discloses sprayable coating compositions comprising mixtures of PTFE and other fluoropolymers which are intended to produce coatings free of cracks. Several coating layers may be applied to build up the desired thickness. However, the principal aim of the disclosure is to produce non-porous coatings which are crack-free.

European patent specification EP0087149 discloses sintered porous PTFE articles which have been formed from fine-powder type PTFE. However, the porosities are quite low, being typically about 18% voids at specific gravities of around 2.0.

European patent specification EP0172750 describes the production of sintered PTFE articles of specific gravity at least 1.8 by heating granular type PTFE particles under pressure. The sintered articles are then expanded at a lower temperature to form a porous material. The specific gravity of the expanded porous material is not disclosed, though elongations of 450 to 5000% are exemplified and the draw ratio is said to be up to about 10.

French patent specification FR 2050778 discloses a method of preparing a porous PTFE sheet by mixing PTFE powder with a gelling agent to produce a suspension. This suspension is then applied to a support by the application of many successive layers. Each layer is dried before application of a further layer. Finally, the structure produced is baked in an oven at 350°C in order to decompose the gelling agent and produce a porous structure of a specific gravity of about 1.0. However, this reference does not mention the use of granular-type PTFE, which has been found to be essential to the operation of the present invention.

German patent specification DE 1199972 discloses a porous PTFE structure which is produced by compressing and heating PTFE particles. Compression of the PTFE particles occurs under a pressure which in the Examples is generally in the range 2-4kg/cm2, and which can be expected to produce a compressed structure prior to heating. The specific gravity of the final PTFE structure is not disclosed in the example, but which is likely to be relatively high in view of the compression step. Furthermore, the reference does not disclose the use of granular-type PTFE.

Japanese patent publication 79,133,566 (Yuasa Battery Co. Ltd.) discloses fabrics made from PTFE fibres which are impregnated with PTFE emulsions containing a hydrophilic inorganic powder and sintered to give a membrane. The specific gravity of the final membrane is not stated. However, the preparation procedure includes a rolling step which may be expected to compress the membrane and increase its specific gravity. PTFE fibres are commonly formed from so-called fine powder PTFE and it is to be expected that the fibres in this reference would be formed of fine powder PTFE, which is a different type of PTFE to the granular type used in the present invention.

European patent application EP 0369466 discloses a material which has been formed from fine powder PTFE (referred to in the text as "emulsion polymerised PTFE"). This is a material which is quite distinct from the granular-type PTFE which is an essential feature of the present invention. It is known that PTFE can exist in different physical forms, which are prepared in rather different ways and have distinct physical properties and uses. "Polytetrafluoroethylene" by S. Sherratt (Kirk-Othmer Encyclopedia of Chemical technology, Vol. 9, 2nd ed., Interscience Publishers Inc., New York, 1966, pp.805-831) distinguishes three separate physical forms of PTFE viz granular polymer, coagulated dispersion polymer and liquid dispersion, which might be regarded as three different chemicals from the point of view of a fabricator using these materials. PTFE is produced by polymerisation of tetrafluoroethylene (TFE) in water at moderate temperature and pressure e.g. 4-80°C and 50-400 psia (3.5-28.1 kg/cm2). Granular-type PTFE is produced by polymerisation with an initiator, possibly in the presence of alkaline buffer, and results in the precipitation of solid particles of PTFE. The material is difficult to process and is generally formed by ram extrusion. Fine powder PTFE (also referred to as coagulated dispersion polymer) is prepared by polymerisation in the presence of an emulsifier, and leads to a dispersion of small PTFE particles. The dispersion is then treated to coagulate the dispersion to form an agglomerate which floats on water. This material is widely used to form expanded porous PTFE membrane. Alternatively, the dispersion can be stabilised by the addition of further surfactant to form liquid dispersion PTFE. It is important to understand that the present invention is only concerned with one of these, namely granular-type PTFE.

Broadly stated, the present invention provides a porous continuous medium comprising particles of granular-type polytetrafluoroethylene fused such as to form a porous integral network of interconnected particles.

Thus one aspect of the present invention provides a porous polytetrafluoroethylene structure which comprises particles of granular-type polytetrafluoroethylene fused together such as to form a porous integral network of interconnected particles; having a specific gravity in the range; more than 0.80 to 1.54; with the proviso that the structure has not been subjected to a stretching step.

Such unsupported PTFE structures may be used, for example, as battery separators.

A further aspect of the invention provides a filter element which comprises the porous polytetrafluoroethylene structure. A particular embodiment comprises a perforate strength member substrate; a porous continuous coating medium covering the substrate, such that the substrate provides a mechanical support for the coating; the coating comprising particles of granular-type polytetrafluoroethylene fused such as to form a porous integral network of interconnected particles having a specific gravity in the range: more than 0.80 to 1.54.

Thus, the present invention provides a porous structure based on PTFE which is robust enough for use in, for example, industrial filtration applications.

The material from which the perforate substrate is produced is of secondary importance, provided that if desired, it can be securely bonded to the porous coating and has a chemical inertness appropriate to the end use of the filter element. Suitable materials include metals, plastics and ceramics. The perforate substrate may be formed of a perforated, sintered or mesh material (including woven, non-woven, and knitted materials). The perforations preferably comprise at least 25%, more preferably at least 50% of the surface area of the substrate. Especially preferred substrates include metal mesh (e.g.stainless steel mesh), porous sintered metal, and woven and non-woven PTFE-based or polypropylene-based textile materials.

The perforate substrate is usually a sheet-like material but is not necessarily planar, and may take a variety of forms such as curved, convex, concave, tubular or irregular shaped. The substrate may be flexible or substantially rigid. The perforate substrate may itself be attached to a further support element, e.g. by spot welding.

The size of the perforations in the substrate is greater than the pore size of the continuous coating. Preferably the perforations have an average pore size greater than 100 microns, while the coating has an average pore size less than 15 microns.

The substrate may require to be roughened (e.g. by grit blasting) to provide a key for the coating.

The porous nature of the PTFE structure results from the particulate nature of the granular-type PTFE used to form it. The baking conditions are chosen such that the PTFE particles become partially fused or sintered into an integral porous network during baking. It is an important feature of the present invention that granular type PTFE is employed. As is well known, PTFE can exist in two quite different forms viz; the granular type produced by precipitation polymerization techniques, and the powdered type produced by dispersion polymerization processes. These two types of PTFE have quite different properties and have to be considered separately.

Unsintered granular-type PTFE generally has a crystallinity in excess of 95% as determined by differential scanning calorimetry or by infra-red techniques. The degree of crystallinity is reduced by sintering (i.e. baking), and the structure of the present invention will typically have a crystallinity of less than 95%, often less than 80%. The structure may be produced from granular-type PTFE particles which are either sintered or unsintered (or a mixture of both) prior to fusing together.

The particles themselves are preferably substantially pure granular-type PTFE, possibly including minor amounts of other materials, such as fillers. The average particle size is usually in the range 1-500, usually 1-200, particularly 1-100 microns. Depending on the desired porosity of the structure, the particles may have the same particle size, or a range of varying particle sizes may be included which pack to influence the porosity of the structure. One preferred embodiment uses mixtures of particles of weight average particle sizes 20-50 and 30-60 microns. The granular-type PTFE may be milled or unmilled.

The porosity may be determined as a function of the density of the PTFE structure. The structure of the present invention has a specific gravity of: more than 0.80 to 1.54 (e.g. 1.00 to 1.54). In comparison, pure non-porous PTFE typically has a specific gravity of 2.16.

In another aspect the present invention provides a process for the production of a porous polytetrafluoroethylene structure which comprises spraying a suspension comprising particles of granular-type polytetrafluoroethylene and baking such as to form a porous integral network of interconnected particles, the structure having a specific gravity in the range: more than 0.80 to 1.54.

The structure is generally formed by spraying a suspension comprising particles of granular-type PTFE onto a substrate, allowing to dry and baking at a temperature usually in the range 335-350°C for 0.5 to 3 hrs. Generally, the process is conducted at atmospheric pressure. Spraying ensures that no air pockets are left between the substrate and the coating produced which might lead to delamination of the coating. The suspension is usually a liquid suspension (e.g. an aqueous suspension) comprising appropriate additives such as surfactants, thickening agents and/or suspending agents. The temperature may be progressively raised over a few hours e.g. 1 to 10 hours in order to remove such additives, prior to baking. If desired, there may also be included fillers such as active carbon, glass, chromium oxide or titanium oxide. In particular the inclusion of active carbon may be used to increase the porosity (and reduce the specific gravity) of the structure.

Spraying is usually more suitable for particles of lower particle size, for example 1-200 microns. Higher particle sizes may be applied by other liquid coating techniques.

The thickness of the structure will vary depending on the required permeability and physical strength, but is usually in the region 25-4000 microns, particularly 125 - 2500 microns. A useful range is 50 to 2500 microns in thickness, and preferably 50 to 1,000 microns.

A porous PTFE coating may simply overlie the substrate (e.g. in the case of a sintered substrate), or the substrate may be embedded in the coating (e.g. when a mesh substrate is used).

However, in one aspect of the invention the finished porous polytetrafluoroethylene structure is peeled from the substrate after baking, and is used without a substrate.

A filter element according to the present invention has the advantages of being chemically inert, so that it does not react and may be cleaned in-situ by dissolving the contaminant with, for example, acids, alkalis, redox agents or organic solvents. The filter element may also be cleaned by back flushing at pressures and flow rates higher than possible with traditional filter media. Due to the non-stick characteristics of the PTFE, the filter element has good release properties permitting ready removal of filtered material. The filter element is also less susceptible to blockage than conventional filters so that there is a reduced need for the application of any precoat or filter aid. The thermal stability of PTFE also allows the filter element to be used for high temperature liquid and gas filtration (usually up to about 260°C) as well as in cryogenic applications. Finally, the filter element may be made in a variety of shapes to suit the particular application, by first forming the substrate in the required shape and subsequently applying the coating.

The filter element may be of a unitary construction in contrast to certain prior art filters which employ a separate filter medium and support member.

Thus, the filter element is suitable for use inter alia in filter presses, candle/leaf filters, rotary vacuum filters, air slides, bag house filters, oil-water separators, and tubular dewatering filters.

Particular applications include tubular filters for cake filtration and backwash cleaning which have the coating medium on the outside; optionally using a precoat, back-pulse filtration and/or gas blowing to dry the cake before removal. Filter leaves may be used instead of tubes. The invention may be used in various filter constructions including rotary drum or disc vacuum or pressure filters, Nutsche filters, filterpresses, filter thickeners, artesian filters, shriver thickeners, filtering centrifuges and cross-flow filters. The invention may also be applied to flat, cylindrical or other shaped underdrains in sand filters; optionally containing adsorptive materials. The filter may be used in catalytic reactors to filter catalyst from product stream, in a wide variety of industrial processes.

Embodiments of the present invention will now be described by way of example only.

### EXAMPLE 1

### Preparation of granular PTFE suspension.

500 grams of DuPont (trademark) granular PTFE grade 9B which had been milled to a weight average particle size of about 40 microns (2-100 microns size range), 13 ml of Zonyl (trademark) FSN 100 surfactant (a non-ionic perfluoroalkyl ethoxylate mixture), 41 ml of Pluronic (trademark) L121 surfactant (a polyoxyethylene/ polyoxypropylene block copolymer), 114 ml of a 1% sodium carboxy-methyl-cellulose solution in water (thickening agent) weight-for-weight solids were added to 343 grams of water and blended in a Waring blender for 5 minutes.

### Formation of porous granular PTFE structure.

The above suspension was sprayed onto a ceramic tile to a nominal wet film thickness of 1000 microns using a Binks BBR spray gun and L88 pressure cup, then dried in an oven at 65°C for 1 hour. The temperature was then progressively increased over a few hours up to 350°C and held for 45 minutes. The resultant film was then cooled and peeled from the ceramic tile. After testing it was found that it exhibited a high air permeability.

The same procedure as outlined above was repeated using DuPont granular PTFE grade 7A in place of the granular PTFE grade 9B. The resultant film exhibited a much lower air permeability. The 100% PTFE 9B and 100% PTFE 7A structures exhibited the following characteristics.

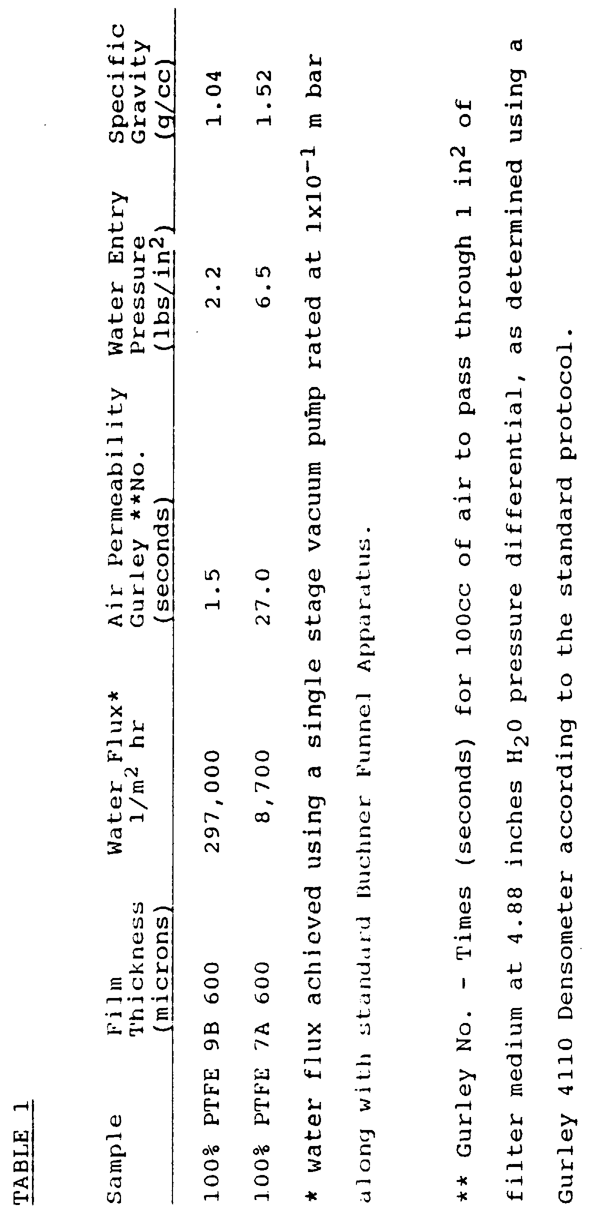

Water entry pressure is determined by placing a sample of the film on the underside of a sheet of perspex 10mm thick having a 2mm diameter hole therein, with air above the film and water beneath. The water is pressurised until water starts to fill the bottom of the hole. This is the water entry pressure.

The specific gravity is determined by weighing a measured area of film of known thickness.

TEFLON (trademark) granular-type PTFE fluorocarbon resin grades 7A and 9B are available from DuPont Speciality Polymers Division, Wilmington U.S.A. Grade 9B is a premelted sintered resin. The product specification indicates an average specific gravity of 2.16, and an average particle size of 35 microns (grade 7A) and 500 microns (grade 9B prior to milling).

Prior to use, the PTFE grade 9B was milled by grinding an aqueous slurry thereof between grinding stones at room temperature using an arrangement as described in US patent 4 841 623. The particle size of the milled PTFE was determined by dispersion in isopropyl alcohol using an ultrasonic device and a surfactant, followed by measurement using a Leeds and Northrup Microtrac II (model 7998) particle size analyser.

PTFE grade 7A was unsintered and was used as supplied.

### EXAMPLE 2 (various compositions)

To produce a range of porous structures unsintered granular PTFE suspensions were made up by repeating the procedures of Example 1 with varying percentages weight for weight of PTFE grade 9B and PTFE grade 7A.
The characteristics of typical resultant porous structures are tabulated as follows.

**TABLE 2**

| Sample | | Thickness (micron) | Water flux* 1/m²hr | Permeability Gurley No.** seconds) | Water Entry Pressure (lb/in²) | Specific Gravity (g/cc) |
|---|---|---|---|---|---|---|
| 9B | 7A | | | | | |
| 95% | 5% | 600 | 286,000 | 1.5 | 2.6 | 1.09 |
| 85% | 15% | 560 | 245,000 | 3.0 | 2.7 | 1.12 |
| 80% | 20% | 550 | 245,000 | 3.6 | 2.8 | 1.15 |
| 65% | 35% | 600 | 177,000 | 5.0 | 3.2 | 1.23 |
| 55% | 45% | 730 | 138,000 | 9.6 | 3.7 | 1.28 |
| 25% | 75% | 760 | 26,000 | 11.0 | 5.0 | 1.40 |

Also, a structure of particularly high porosity was obtained from a mixture of 86% grade 7A together with 14% by weight of active carbon (Chemviron grade 114A). The specific gravity of the final structure was 1.14.

### EXAMPLE 3 (coated mesh)

A sheet of woven stainless steel mesh (wire diameter 0.375 mm with 20 wires/inch warp and weft) was spot welded to a square mild steel frame. The procedure of Example 1 was repeated to make a coating composition containing 100% PTFE grade 9B (resin content). The coating composition was sprayed onto both sides of the stainless steel mesh. The coating was then air dried at 65°C in an oven for 30 minutes. The temperature was then raised to 350°C and held at this temperature for 45 minutes. The coating thickness after baking was nominally 850 microns.

If required, in order to increase the coating thickness, further applications of coating composition could be sprayed and baked in analogous manner.

The filter element so produced was found to have good mechanical strength and high porosity.

### EXAMPLE 4 (filter performance).

The procedure of Example 1 was repeated using a coating composition containing 50% PTFE grade 9B and 50% PTFE grade 7A by weight (resin content).

The resulting material was evaluated as a septum to determine performance criteria versus conventional filter cloth. The objective was to determine precoat bleed-through characteristics of a filter cake formed on a suction leaf test filter after aeration. This test simulates the mode of operation of a rotary vacuum filter when the filter cloth rotates out of the liquid bath, into free space (air) and then back into the liquid bath. Excessive precoat bleed-through in some applications is often undesirable.

The test apparatus comprised a flask connected to a vacuum source and equipped with a vacuum gauge, and also connected via a tube to a suction leaf immersed in the water to be filtered. The test apparatus had a hydraulic capacity of 18 seconcs litre (time taken to pass 1 litre of de-ionized water through the suction leaf with no filter medium attached).

A slurry comprising 5.5g of precoat material/litre of de-ionized water was made up. The precoat employed was Celite 577 (Manville Corporation). Celite is a trademark.

The clarity (turbidity, expressed in Jackson Turbidity Units JTU) was measured prior to aeration and then again after aeration and dipping of the vacuum leaf back into the precoat slurry.

Two conventional filter cloths viz. Eimco POPR 873 (25-35 Frazier Number) and Eimco NY 518F (1 Frazier Number) were tested along with the 50% 9B/50% 7A coating composition.
The test yielded the following results.

**Table 3**

| | Time to filter one litre of water from precoat slurry (seconds). | Clarity JTU after filtering one litre of water before aeration. | Clarity JTU after aeration and filtering 700ml of water |
|---|---|---|---|
| POPR 873 | | | |
| Eimco cloth | 52 | 95 | 200 |
| | | | |
| NY518F | | | |
| Eimco cloth | 49 | 30 | 70 |
| | | | |
| PTFE porous structure | | | |
| 50% 9B/50% 7A | 47 | 9 | 17.7 |

The results show that the porous PTFE structure exhibited superior (lower) bleed-through characteristics to conventional filtration fabrics.

## Claims

1. A porous polytetrafluoroethylene structure which comprises particles of granular-type polytetrafluoroethylene fused together such as to form a porous integral network of interconnected particles; and having a specific gravity in the range: more than 0.80 to 1.54; with the proviso that the structure has not been subjected to a stretching step.

2. A structure according to any preceding claim in the form of a layer having a thickness in the region 50 to 2500 microns.

3. A structure according to any preceding claim which has been produced by spraying the particles.

4. A structure according to any preceding claim which includes a filler.

5. A structure according to any preceding claim which has been produced from a mixture of particles of sintered and unsintered PTFE particles.

6. A structure according to any preceding claim which further includes a perforate substrate, the porous integral polytetrafluoroethylene network covering the substrate.

7. A structure according to claim 6 wherein the perforate substrate is selected from a metal mesh, a porous sintered metal, and a woven or non-woven polytetrafluoroethylene-based or polypropylene-based textile material.

8. A filter element for filtering liquid which comprises the porous polytetrafluoroethylene structure of any preceding claim.

9. A filter element which comprises
- a perforate strength member substrate;
- a porous continuous coating covering the substrate, such that the substrate provides a mechanical support for the coating;
- the coating comprising particles of granular-type polytetrafluoroethylene fused such as to form a porous integral network of interconnected particles having a specific gravity in the range: more than 0.80 to 1.54.

10. A filter element according to claim 9 wherein the coating is formed from 100% sintered polytetrafluoroethylene particles of weight average particle size 40 microns (determined as described herein).

11. A process for the production of a porous polytetrafluoroethylene structure which comprises spraying a suspension comprising particles of granular-type polytetrafluoroethylene and baking such as to form a porous integral network of interconnected particles; the structure having a specific gravity in the range: more than 0.80 to 1.54.

12. A process acdording to claim 11 wherein baking is effected at a temperature of 335 to 350°C.

13. A process according to claim 11 or 12 which is conducted at atmospheric pressure.

14. A process according to any of claims 11 to 13 wherein baking is effected at atmospheric pressure.

15. A process according to any of claims 11 to 14 which comprises using a mixture of sintered and unsintered polytetrafluoroethylene particles.

16. A process according to any of claims 11 to 14 wherein the particles are sintered polytetrafluoroethylene particles.

17. A process according to any of claims 11 to 14 wherein the particles are unsintered polytetrafluoroethylene particles.

## Patentansprüche

1. Poröse Polytetrafluorethylen-Struktur, umfassend Partikel aus körnigem Polytetrafluorethylen, die derart miteinander verschmolzen sind, daß ein poröses, integrales Netzwerk aus miteinander verbundenen Partikeln gebildet ist, welches ein spezifisches Gewicht im Bereich von mehr als 0,80 bis 1,54 aufweist, mit der Maßgabe, daß die Struktur nicht gereckt wurde.

2. Struktur nach dem vorhergehenden Anspruch in Form einer Schicht mit einer Dicke im Bereich von 50 bis 2500 µm.

3. Struktur nach einem der vorhergehenden Ansprüche, hergestellt durch Sprühen der Partikel.

4. Struktur nach einem der vorhergehenden Ansprüche, die einen Füllstoff enthält.

5. Struktur nach einem vorhergehenden Anspruch, hergestellt aus einem Gemisch von Partikeln aus gesinterten und ungesinterten PTFE-Partikeln.

6. Struktur nach einem vorhergehenden Anspruch, weiterhin umfassend ein perforiertes Substrat, wobei das poröse integrale Polytetrafluorethylen-Netzwerk das Substrat bedeckt.

7. Struktur nach Anspruch 6, bei dem das perforierte Substrat ausgewählt ist aus einem Metall-Maschenwerk, einem porösen, gesinterten Metall und einem gewebten oder nicht-gewebten textilen Stoff auf Polytetrafluorethylen-Basis oder Polypropylen-Basis.

8. Filterelement zum Filtern einer Flüssigkeit, umfassend die poröse Polytetrafluorethylen-Struktur nach einem vorhergehenden Anspruch.

9. Filterelement, umfassend:
- ein perforiertes Verstärkungssubstrat;
- einen porösen, durchgehenden Überzug, der das Substrat bedeckt, so daß das Substrat einen mechanischen Träger für den Überzug bildet;
- wobei der Überzug Partikel aus körnigem Polytetrafluorethylen aufweist, die miteinander derart verschmolzen sind, daß ein poröses integrales Netzwerk aus miteinander verbundenen Partikeln gebildet wird, welches ein spezifisches Gewicht im Bereich von mehr als 0,80 bis 1,54 aufweist.

10. Filterelement nach Anspruch 9, bei dem der Überzug aus 100 Gew.-% gesinterten Polytetrafluorethylen-Partikeln mit einer mittleren Teilchengröße von 40 µm (definiert, wie hier beschrieben) aufweist.

11. Verfahren zur Herstellung einer porösen Polytetrafluorethylen-Struktur, umfassend das Aufsprühen einer Suspension, welche Partikel aus körnigem Polytetrafluorethylen enthält, und Backen derart, daß ein poröses integrales Netzwerk aus miteinander verbundenen Partikeln gebildet wird, wobei die Struktur ein spezifisches Gewicht im Bereich von über 0,80 bis 1,54 aufweist.

12. Verfahren nach Anspruch 11, bei dem das Backen bei einer Temperatur von 335 bis 350°C durchgeführt wird.

13. Verfahren nach Anspruch 11 oder 12, durchgeführt unter atmosphärischem Druck.

14. Verfahren nach einem der Ansprüche 11 bis 13, bei dem das Backen unter atmosphärischem Druck erfolgt.

15. Verfahren nach einem der Ansprüche 11 bis 14, umfassend die Verwendung eines Gemisches aus gesinterten und ungesinterten Polytetrafluorethylen-Partikeln.

16. Verfahren nach einem der Ansprüche 11 bis 14, bei dem die Partikel gesinterte Polytetrafluorethylen-Partikel sind.

17. Verfahren nach einem der Ansprüche 11 bis 14, bei dem die Partikel ungesinterte Polytetrafluorethylen-Partikel sind.

## Revendications

1. Structure poreuse de polytétrafluoroéthylène qui comprend des particules de polytétrafluoroéthylène de type granulaire réunies par fusion afin de former un réseau poreux intégral de particules interconnectées; et ayant un poids volumique compris dans l'intervalle: plus de 0,80 à 1,54; étant entendu que la structure n'a pas été soumise à une étape d'étirage.

2. Structure selon la revendication précédente, sous la forme d'une couche ayant une épaisseur comprise dans le domaine de 50 à 2500 microns.

3. Structure selon l'une quelconque des revendications précédentes, qui a été produite en pulvérisant les particules.

4. Structure selon l'une quelconque des revendications précédentes, qui englobe une charge.

5. Structure selon l'une quelconque des revendications précédentes, qui a été produite à partir d'un mélange de particules frittées et non frittées de PTFE.

6. Structure selon l'une quelconque des revendications précédentes , qui englobe en outre un substrat perforé, le réseau poreux intégral de polytétrafluoroéthylène couvrant le substrat.

7. Structure selon la revendication 6, dans laquelle le substrat perforé est choisi parmi un treillis métallique , un métal fritté poreux, et un matériau textile à base de polypropyléne ou à base de polytétrafluoroéthylène, tissé ou non tissé.

8. Elément filtrant pour la filtration de liquide qui comprend la structure poreuse de polytétrafluoroéthylène selon l'une quelconque des revendications précédentes.

9. Elément filtrant qui comprend:
- un substrat de type élément de résistance perforé;
- un revêtement poreux continu recouvrant le substrat, de telle sorte que le substrat fournisse un support mécanique pour le revêtement;
- le revêtement comprenant des particules de polytétrafluoroéthylène de type granulaire réunies par fusion afin de former un réseau poreux intégral de particules interconnectées ayant un poids volumique compris dans l'intervalle: plus de 0,80 à 1,54.

10. Elément filtrant selon la revendication 9, dans lequel le revêtement est formé à partir de particules de polytétrafluoroéthylène frittées à 100 % de dimensions moyennes des particules en poids de 40 microns (déterminées comme décrit ici).

11. Procédé pour la production d'une structure poreuse de polytétrafluoroéthylène qui comprend la pulvérisation d'une suspension comprenant des particules de polytétrafluoroéthylène de type granulaire et la cuisson afin de former un réseau poreux intégral de particules interconnectées; la structure ayant un poids volumique compris dans l'intervalle : plus de 0,80 à 1,54.

12. Procédé selon la revendication 11 dans lequel la cuisson s'effectue à une température de 335 à 350 °C.

13. Procédé selon la revendication 11 ou 12, qui est réalisé à pression atmosphérique.

14. Procédé selon l'une quelconque des revendications 11 à 13, dans lequel la cuisson s'effectue à pression atmosphérique.

15. Procédé selon l'une quelconque des revendications 11 à 14, qui comprend l'utilisation d'un mélange de particules frittées et non frittées de polytétrafluoroéthylène.

16. Procédé selon l'une quelconque des revendications 11 à 14, dans lequel les particules sont des particules frittées de polytétrafluoroéthylène.

17. Procédé selon l'une quelconque des revendications 11 à 14, dans lequel les particules sont des particules non frittées de polytétrafluoroéthylène.
